# FASCICULE DE BREVET EUROPEEN

(11) **EP 2 325 057 B1**
(45) Date de publication et mention de la délivrance du brevet: **24.07.2013**
(21) Numéro de dépôt: 10306278.2
(22) Date de dépôt: 19.11.2010
(51) Int. Cl.: B60R 19/12, B60R 19/18, B60R 19/52

(54) **Bouclier pare-chocs pour véhicule automobile**
Stossstangenstruktur für Kraftfahrzeug
Bumper structure for automotive vehicle

(30) Priorité: 20.11.2009 FR 0958237
(43) Date de publication de la demande: 25.05.2011
(73) Titulaire: Faurecia Bloc Avant, 92000 Nanterre (FR)
(72) Inventeur: Gonin, Vincent, 37540, SAINT CYR SUR LOIRE (FR)
(74) Mandataire: Domenego, Bertrand

(56) Documents cités:
- EP-A1- 1 293 389
- WO-A2-2007/074300
- FR-A1- 2 896 222

## Description

La présente invention concerne un bouclier pare-chocs pour véhicule automobile comprenant deux longerons principaux, deux longerons auxiliaires disposés à une hauteur inférieure, ainsi que des platines d'appui et de fixation disposées entre les extrémités des longerons. Un tel bouclier est connu du document WO 2007/074 300 A2.

Les véhicules automobiles modernes sont conçus pour répondre de façon convenable à différents types de chocs frontaux possibles, tels que les chocs à petite vitesse ou « chocs parking », pour une vitesse comprise entre 2,5 et 4 km/h (ECE42), les chocs à moyenne vitesse ou « chocs réparabilité », pour une vitesse d'environ 16 km/h (Danner) et les chocs à grande vitesse, pour une vitesse comprise entre 56 et 65 km/h.

Les véhicules automobiles modernes sont également conçus pour protéger les piétons en cas de choc piéton, et en particulier pour protéger les jambes et la hanche du piéton.

Il est possible de prévoir un ensemble avant comprenant une poutre pare-chocs supérieure métallique fixée aux extrémités de longerons principaux avant d'une voie haute (brancards principaux) par l'intermédiaire de premiers absorbeurs de chocs métalliques rapportés sur la poutre pare-chocs supérieure, et une poutre pare-chocs inférieure fixée aux extrémités de longerons auxiliaires avant d'une voie basse (par exemple des prolonges de berceau) par l'intermédiaire de second absorbeurs de chocs métalliques ou en matière plastique, rapportés sur la poutre pare-chocs inférieure.

Néanmoins, un tel ensemble avant est compliqué et coûteux à fabriquer et à installer.

Un but de l'invention est de proposer un bouclier pare-chocs permettant de répondre de manière convenable aux chocs piétons et aux chocs à petite et moyenne vitesse, tout en étant simple et en présentant un coût de fabrication faible.

A cet effet, l'invention propose un bouclier pare-chocs du type précité, qui est monobloc en matière plastique et formé de deux montants et d'une poutre supérieure reliant les montants, les montants étant configurés pour prendre appui sur les platines de manière à faire office d'absorbeurs de chocs caractérisé en que que, le bouclier a une forme en H ou en U inversé conférée par les montants et la poutre supérieure.

Selon d'autres modes de réalisation, le bouclier pare-chocs comprend une ou plusieurs des caractéristiques suivantes, prise(s) isolément ou selon toutes les combinaisons techniquement possibles :
- la poutre supérieure est sensiblement à hauteur des longerons principaux ;
- la poutre supérieure est disposée à une hauteur sensiblement différente de celle des longerons principaux ;
- les montants possèdent une épaisseur comprise entre 120 et 220 mm ;
- les montants présentent une structure alvéolaire formée d'alvéoles s'étendant longitudinalement au travers des montants et débouchant sur la face arrière et/ou avant du bouclier ;
- chaque montant comprend des premières alvéoles borgnes, fermées du côté de la face arrière et ouvertes du côté de la face avant, et des deuxièmes alvéoles borgnes ouvertes du côté de la face arrière et fermées du côté de la face avant ;
- la poutre pare-chocs supérieure est double et comprend deux traverses espacées verticalement ; et
- le bouclier pare-chocs comprend au moins une nervure d'absorption piéton faisant saillie vers l'extérieur à partir d'un montant.

L'invention a également pour objet un ensemble pare-chocs de véhicule automobile, du type comprenant deux longerons principaux et deux longerons auxiliaires disposés à une hauteur inférieure et des platines d'appui et de fixation disposées aux extrémités des longerons, lequel comprend un bouclier pare-chocs tel que défini ci-dessus, les montants étant fixés en appui rigide contre les platines.

Selon d'autres modes de réalisation, l'ensemble selon l'invention comprend une ou plusieurs des caractéristiques suivantes, prise(s) isolément ou selon toutes les combinaisons techniquement possibles :
- les montants sont fixés aux platines par vissage et/ou collage ;
- l'ensemble tel que défini ci-dessus comprend deux platines, chaque platine reliant un longeron principal et un longeron auxiliaire et s'étendant sur toute la hauteur séparant le longeron principal du longeron auxiliaire, chaque montant étant appliqué sur la platine commune suivant sensiblement toute sa hauteur ;
- l'ensemble comprend en outre une poutre inférieure s'étendant transversalement entre les longerons auxiliaires et distincte du bouclier pare-chocs ;
- une nervure d'absorption piéton se prolonge latéralement pour s'appliquer sur la poutre supérieure ;
- l'ensemble est un ensemble pare-chocs avant de véhicule automobile ; et
- l'ensemble est un ensemble pare-chocs arrière de véhicule automobile.

L'invention et ses avantages seront mieux compris à la lecture de la description qui va suivre, donnée uniquement à titre d'exemple, et faite en référence aux dessins annexés, sur lesquels :
- la figure 1 est une vue schématique en perspective éclatée d'un ensemble pare-chocs avant selon l'invention ;
- la figure 2 est une vue en coupe de côté de l'ensemble de la figure 1 ; et
- la figure 3 est une vue en perspective de trois-quarts avant d'un bouclier pare-chocs avant de l'ensemble des figures 1 et 2 ;
- la figure 4 est une vue en perspective de trois-quarts arrière d'une variante du bouclier pare-chocs avant de l'ensemble des figures 1 et 2.

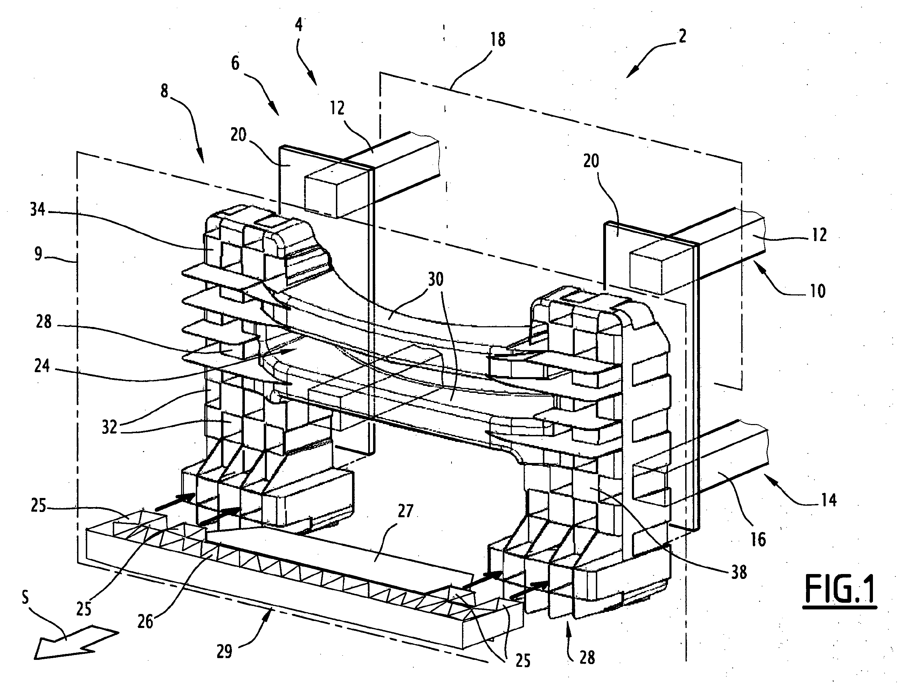

Par la suite, les termes d'orientation s'entendent par référence à l'orientation usuelle des véhicules automobiles, illustrée sur la figure 1 par la flèche S dirigée horizontalement vers l'avant suivant une direction longitudinale du véhicule automobile.

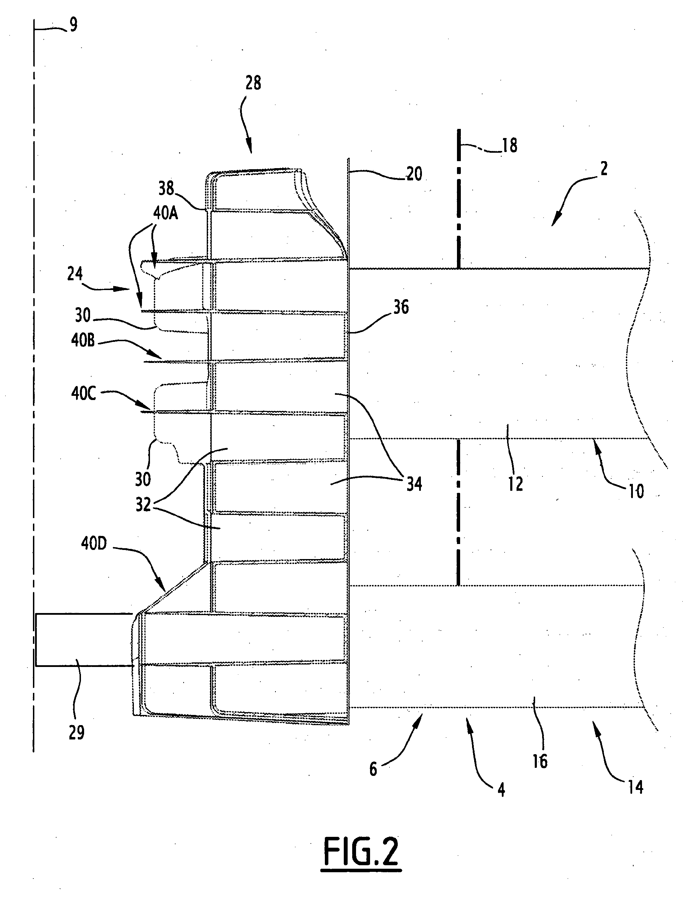

Tel que représenté sur les figures 1 et 2, un véhicule automobile 2 comprend un châssis 4 comprenant une partie avant 6, un bouclier 8 pare-chocs avant disposé à l'extrémité avant de la partie avant 6 pour protéger la partie avant 6 en cas de choc, et une peau 9 de pare-chocs pour recouvrir le bouclier 8.

La partie avant 6 comprend une voie haute 10 comprenant une paire de longerons principaux 12 et une voie basse 14 comprenant une paire de longerons auxiliaires 16.

Les longerons principaux 12 sont aussi nommés brancards.

Selon un mode de réalisation de l'invention, les longerons auxiliaires 16 sont des prolonges de berceau, s'étendant vers l'avant à partir d'un berceau fixé entre les longerons 16, par exemple un berceau moteur.

Les longerons auxiliaires 16 sont situés à une hauteur inférieure à celle des longerons principaux 12. Ils sont agencés au-dessous des longerons principaux 12, sensiblement dans le même plan longitudinal.

Les longerons principaux 12 s'étendent longitudinalement et sont espacés transversalement l'un de l'autre.

Les longerons auxiliaires 16 s'étendent longitudinalement et sont espacés transversalement l'un de l'autre. L'écartement transversal entre les longerons auxiliaires 16 est sensiblement égal à celui entre les longerons principaux 12.

Les longerons principaux 12 sont tarés pour encaisser une force axiale maximale sans flambement comprise entre 80kN et 100kN. Les longerons auxiliaires 16 sont tarés pour encaisser une force axiale maximale sans flambement comprise entre 25kN et 45kN. Sur certains véhicules aux gabarits éloignés de la moyenne, les fourchettes de tarage proposées peuvent différer légèrement, sans sortir du cadre de l'invention.

Les longerons principaux 12 sont prévus pour recevoir entre eux et supporter au moins en partie une face avant 18. La face avant 18 est représentée sur la figure 1 de façon schématique par un rectangle en traits mixte. De manière connue, la face avant 18 comprend un cadre de support portant des organes fonctionnels d'un système de refroidissement du groupe motopropulseur du véhicule et/ou d'un système de climatisation, tel qu'un ou plusieurs radiateurs ou un groupe motoventilateur.

La face avant 18 est fixée aux longerons principaux 12 et à des longerons d'aile supportant les ailes de la carrosserie, et situés au-dessus des longerons principaux 12 et en retrait vers l'arrière par rapport aux longerons principaux 12.

La face avant 18 se situe en retrait vers l'arrière des extrémités avant des longerons principaux 12 et auxiliaires 16.

La partie avant 6 comprend une paire de platines 20 de fixation disposées aux extrémités avant des longerons principaux 12 et auxiliaires 16. Chaque platine 20 relie l'extrémité avant d'un longeron principal 12 à celle du longeron auxiliaire 16 adjacent situé du même côté. Chaque platine 20 présente la forme d'une plaque métallique s'étendant dans un plan transversal sensiblement vertical. Les platines 20 peuvent être réalisées en acier embouti, roulé, plié, ou encore en alliage léger.

La peau 9 est un élément de carrosserie avant du véhicule et définissant le galbe extérieur du véhicule.

Le bouclier 8 est disposé entre la peau 9, par laquelle il est recouvert, et la partie avant 6. Il a pour fonction d'absorber l'énergie de chocs à petite vitesse et de chocs à moyenne vitesse (Danner) de façon à préserver le châssis 4, et de protéger un piéton en cas de choc piéton.

Le bouclier 8 est disposé aux extrémités avant des longerons principaux 12 et auxiliaires 16 en étant fixé en appui longitudinal rigide directement contre les platines 20 sans interposition d'élément additionnel d'absorption d'énergie en cas de choc. Le bouclier 8 est disposé devant la face avant 18 de façon à la protéger, ainsi que les organes fonctionnels qu'elle porte.

Le bouclier 8 est monobloc en matière plastique et est formé d'une poutre pare-chocs supérieure 24 située à hauteur de la voie haute 10 et de deux montants 28 reliés entre eux par la poutre pare-chocs 24. Le bouclier 8 a une forme en H ou en U inversé, conférée par les montants 28 et la poutre pare-chocs supérieure 24. Les montants 28 s'étendent vers le bas à partir des extrémités latérales de la poutre supérieure 24.

Le véhicule 2 comprend en outre une poutre pare-chocs inférieure 29, s'étendant sensiblement transversalement et horizontalement en regard de la partie inférieure des montants 28 et distincte du bouclier 8.

Selon un mode de réalisation, la poutre pare-chocs inférieure 29 est venue de matière avec la peau 9.

En variante, la poutre pare-chocs inférieure 29 comporte à ses extrémités latérales des pattes de fixation 25, aptes à s'emboîter de manière rigide dans la partie inférieure des montants 28. La partie centrale 26 de la poutre 29 est conçue de manière à travailler en flexion en réponse à un choc. La poutre inférieure 29 comporte également une plaque 27 de canalisation d'air s'étendant horizontalement vers l'arrière à partir de la partie centrale 26 entre les montants 28 et sensiblement perpendiculaire à ceux-ci.

La poutre pare-chocs supérieure 24 s'étend sensiblement transversalement et horizontalement entre les montants 28. Elle a pour fonction de canaliser l'énergie d'un choc vers les montants 28 en cas de collision.

La poutre pare-chocs supérieure 24 est prévue pour venir impacter la jambe d'un piéton sensiblement au droit du genou. La poutre supérieure 24 est adaptée pour travailler essentiellement en flexion en cas d'impact sur la poutre supérieure 24.

L'amplitude verticale de la poutre pare-chocs supérieure 24 est comprise entre 100 mm et 200 mm, de préférence entre 120mm et 150mm, ce qui représente une augmentation de 30% à 80% par rapport à l'amplitude verticale des poutres pare-chocs supérieures métalliques classiques, de hauteur classiquement comprise entre 70mm et 90mm. Il en résulte une meilleure compatibilité avec le genou du piéton (cisaillement réduit), du fait de la moindre sensibilité à une dispersion de l'organisme du piéton (taille du tibia) ou à l'assiette du véhicule (degré de chargement, assiette de freinage). L'avantage est identique en configuration de choc parking ou de choc compatibilité basse vitesse. Avantageusement, la poutre pare-chocs inférieure 29 est plus rigide et avancée par rapport à la poutre pare-chocs supérieure 24 pour assurer une protection convenable au piéton.

Dans cet exemple, la poutre pare-chocs supérieure 24 est double et comprend au moins deux membrures 30 horizontales parallèles espacées verticalement. Chaque membrure 30 possède une section en U ouverte horizontalement vers l'arrière. Les membrures 30 augmentent l'inertie de la poutre pare-chocs supérieure 24 en flexion et en torsion. Elles peuvent présenter des dépouilles et surtout une hauteur suffisante de manière à ce que l'injection et le démoulage du bouclier 8 soient facilités (classiquement, hauteur comprise entre 30mm et 40mm). En variante, la poutre pare-chocs supérieure 24 comprend une membrure unique.

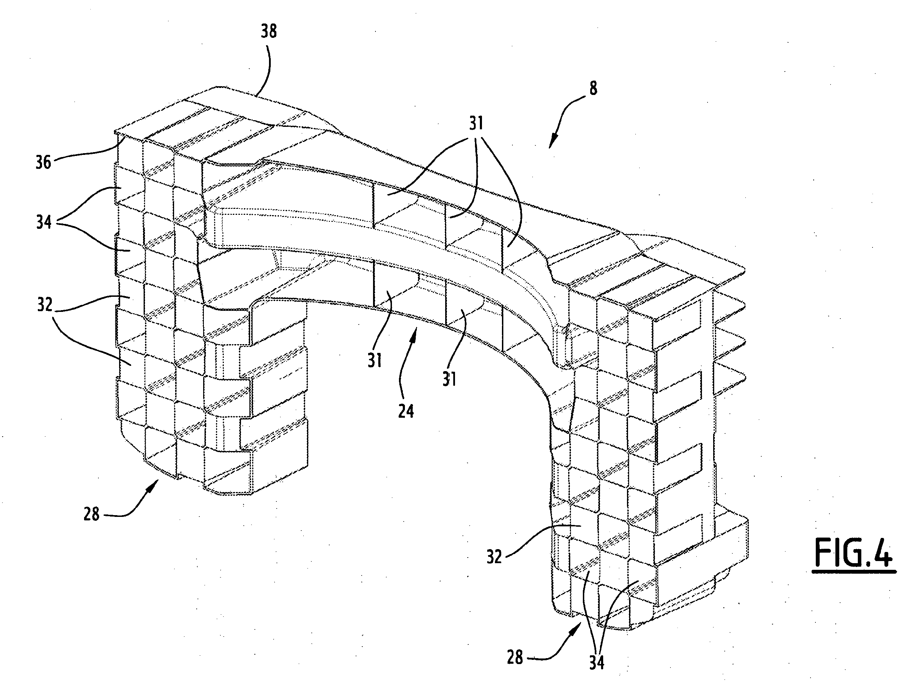

Dans la variante représentée sur la figure 4, le bouclier pare-chocs 8 a une forme en U inversé.

Selon une variante du bouclier 8 en U ou en H inversé, et comme illustré dans la variante en U de la figure 4, chaque membrure 30 comprend des nervures 31 verticales longitudinales intérieures de rigidification pour conférer à la membrure 30 la rigidité souhaitée. Dans une variante avantageuse, les nervures présentes dans les membrures 30 sont réparties sur la largeur de ces membrures, pour que la densité de nervures par unité de longueur en se déplaçant le long d'un axe transversal du véhicule soit supérieure dans une région centrale de la membrure 30 par rapport à la densité dans les régions latérales de la membrure 30 situées de part et d'autre de la région centrale.

Ainsi, la région centrale s'étend par exemple de part et d'autre du centre de la membrure 30 sur une étendue latérale d'environ 200 mm. Cette région centrale présente par exemple un nombre de nervures supérieur à 4.

La présence d'un nombre élevé de nervures dans cette région centrale permet, en choc piéton centré, après impact de la jambe du piéton sur cette région centrale, une réduction de la décélération par flexion pure des membrures 30 sur une course longitudinale comprise entre 50 mm et 70 mm. Cette réponse est radicalement différente de la réponse d'un absorbeur classique en mousse qui travaille en compression pure sur une course comparable.

Chaque région latérale s'étend entre la région centrale et les montants 28 à une distance comprise par exemple entre 200 mm et 300 mm du centre de la membrure 30. Le nombre de nervures dans chaque région périphérique est inférieur à 4. Ainsi, en choc piéton médian, lorsque la jambe du piéton impacte cette région latérale, la réduction de la décélération se fait par une combinaison de flexion et de compression localisée de cette région sur une course proche de 50 mm.

Les montants 28 du bouclier 8 sont prévus pour faire office d'absorbeur d'énergie entre la peau 9 et les platines 20, et pour absorber l'énergie d'un choc sur le bouclier 8 à petite vitesse ou à moyenne vitesse (Danner). Chaque montant 28 est prévu pour travailler essentiellement en compression suivant la direction du choc, ici la direction longitudinale du véhicule.

Ainsi, les montants 28 sont aptes à être fixés directement en appui rigide contre les platines 20, sans interposer des absorbeurs de choc additionnels rapportés entre les montants 28 et les platines 20.

Pour un véhicule automobile dont la masse est comprise entre 800 et 1200 kg, l'énergie à dissiper en cas de choc moyenne vitesse (Danner) est généralement comprise entre 6 et 12 kJ, avantageusement entre 7kJ et 10kJ. De préférence, chaque montant 28 est prévu pour absorber une énergie supérieure à 5 kJ en cas de choc moyenne vitesse (Danner), de préférence comprise entre 6 et 10kJ.

Chaque montant 28 présente une structure alvéolaire comprenant des alvéoles 32, 34 s'étendant longitudinalement entre une face arrière 36 et une face avant 38 des montants 28.

Chaque montant 28 comprend des alvéoles borgnes inversées comprenant des premières alvéoles 32 borgnes, fermées du côté de la face arrière 36 et ouvertes du côté de la face avant 38, et des deuxièmes alvéoles 34 borgnes ouvertes du côté de la face arrière 36 et fermées du côté de la face avant 28. Les premières alvéoles 32 et les deuxièmes alvéoles 34 sont disposées en quinconce (ou damier).

Chaque montant 28 est fixé directement sur la platine 20 correspondante, en contact et en appui longitudinal rigide contre sur la platine 20. Chaque montant 28 recouvre la majeure partie de la surface d'appui offerte par la platine 20 correspondante.

Chaque montant 28 est fixé sur la platine 20 correspondante par vissage ou par collage.

Cette deuxième solution est avantageuse, dans la mesure où elle permet une bonne répartition des efforts. En effet, les contraintes de design liées à l'assemblage par vissage (insert métalliques, trous, semelles de rigidification, espaces pour les visseuses...) sont levées, tandis que les contraintes localisées et les risques d'arrachement causés par le vissage sont très fortement atténués. En outre, la géométrie choisie formée d'alvéoles borgnes inversées disposés en quinconces augmente considérablement la surface d'encollage à l'arrière des montants 28 et participe à la répartition favorable des efforts.

Les platines 20 de grande hauteur, ou platine géantes, raccordant chaque longeron principal 12 à un longeron auxiliaire 16, permet de répartir la distribution des efforts encaissés par le bouclier 8 et la poutre pare-chocs inférieure 29 sur une hauteur importante dans le véhicule, grâce aux montants 28 s'étendant entre les voies haute 10 et basse 14.

Les platines 20 géantes offrent une surface d'appui rigide étendue aux montants 28, ce qui permet aux montants 28 de travailler uniformément en compression en cas de choc, sans flexion dans leur partie médiane située verticalement entre la voie haute 10 et la voie basse 14. Cet atout permet une conception homogène des montants 28, possédant des alvéoles analogues uniformément réparties, démoulables longitudinalement et destinées à travailler essentiellement en compression. L'architecture diffère donc radicalement des structures dépourvues de platines géantes, dont les montants doivent présenter un design destiné à un travail en flexion.

De ce fait, le véhicule muni d'un ensemble avant selon l'invention est moins intrusif lorsqu'il entre en contact avec un autre véhicule, ce qui bénéficie à la compatibilité inter-véhiculaire à basse et moyenne vitesse.

La dimension de l'appui offert par les platines 20 est avantageusement comprise entre 100 et 180 mm en largeur, et entre 350 et 450mm en hauteur, ce qui correspond à des aires globalement comprises entre 3,5 et 8 dm².

La structure alvéolaire des montants 28 facilite la fabrication et confère aux montants une capacité d'absorption d'énergie suffisante sur une profondeur (dimension suivant la direction longitudinale) faible.

Le bouclier 8 est obtenu d'un seul bloc par exemple par moulage par injection de matière plastique. Il peut être démoulé suivant une unique direction correspondant à la direction longitudinale du véhicule automobile lorsque le bouclier 8 est fixé sur le châssis 4. Ainsi, le bouclier 8 peut être obtenu de façon simple, avec un coût de fabrication faible. La structure alvéolaire des montants 28 permet des dépouilles faibles, voire nulles, ce qui limite le poids et le coût de fabrication du bouclier 8. Les pièces obtenues sont donc légères et présentent une économie de matière.

La structure alvéolaire des montants 28 permet également de réduire les épaisseurs locales de parois délimitant les alvéoles 32, 34. Ainsi, cette épaisseur locale peut être réduite dans une gamme comprise entre 2,5 et 4 mm, avantageusement comprise entre 3 mm et 3,5 mm.

En outre, et d'une manière générale, le démoulage du bouclier monobloc 8 est facilité puisque les faibles dépouilles ou leur absence permet un démoulage par mouvement de deux demi-moules opposées dans des sens opposés le long d'un axe correspondant à l'axe longitudinal du véhicule. Ainsi, il n'est pas nécessaire de prévoir des tiroirs ou des parties mobiles dans le moule.

En outre, les dépouilles faibles voir nulles dans les montants 28 en damier permet d'obtenir une raideur uniforme lors d'un enfoncement longitudinal, par exemple lors d'un choc à moyenne vitesse. Ainsi, il est possible d'obtenir un palier d'effort sensiblement constant en fonction du déplacement, ce qui augmente l'énergie dissipée et diminue la course d'absorption, tout en restant sous la force de tarage des longerons 12, 16 définie plus haut.

Il en résulte que l'énergie d'un choc peut être dissipée moyennant une course réduite, et que la solution s'avère très compacte. Cette solution est donc particulièrement adaptée aux véhicules de faible cylindré présentant une course longitudinale d'absorption de choc inférieure à 250 mm, et notamment inférieure à 200 mm. Les montants 28 présentent une épaisseur longitudinale comprise entre 120 et 220 mm. Ceci permet une absorption d'énergie efficace, tout en limitant le porte-à-faux du bouclier 8 pris entre les platines 20 et l'extrémité avant du bouclier 8.

Par ailleurs, en choc piéton décalé latéralement, pour des distances situées notamment à plus de 300 mm du centre des membrures 30, la réduction de la décélération se fait de préférence par compression pure, très localisée, des montants 28 en damier sur une course d'environ 50 mm.

En option, l'absorption d'énergie en choc piéton peut être assurée par un ensemble de nervures 40A, 40B, 40C, 40D venues de matière avec le bouclier 8 faisant saillie vers l'avant à partir des montants 28, comme représenté sur la figure 1. Ces nervures 40A, 40B, 40C, 40D remplissent l'espace entre la peau 9 et les montants 28.

Elles sont relativement souples pour s'écraser longitudinalement plus facilement que les montants 28. Elles définissent ainsi une première zone d'absorption d'énergie plus souple à l'avant de chaque montant 28 plus rigide. Elles permettent ainsi d'absorber l'énergie d'un choc piéton sur une course proche de 50mm, en demeurant en dessous de 150 g de décélération.

Les nervures 40A, 40B, 40C, 40D ont par exemple une épaisseur verticale faible (<3mm) de façon à présenter une souplesse adéquate.

Tel que représenté sur la figure 1, le bouclier 8 comprend des nervures supérieures 40A à hauteur de la membrure 30 supérieure, des nervures intermédiaires 40B, des nervures 40C à hauteur de la membrure 30 inférieure et des nervures inférieures 40D.

Les nervures 40A à 40C font saillie longitudinalement et sensiblement horizontalement à l'avant de la face avant 38 de chaque montant 28, sur toute la largeur du montant 28.

Les nervures supérieures 40A se prolongent latéralement vers le centre de la membrure 30 supérieure pour s'appliquer sur la surface avant de la membrure 30 supérieure et les nervures 40C se prolongent latéralement vers le centre de la membrure 30 inférieure pour s'appliquer sur la surface avant de la membrure 30 inférieure.

Les nervures intermédiaires 40B sont disposées entre la membrure 30 supérieure et la membrure 30 inférieure.

Les nervures inférieures 40D font saillie verticalement à l'avant des montants 28 dans une région des montants 28 située juste au dessus de la poutre inférieure 29.

Ces nervures avant 40A à 40D permettent de définir des zones d'absorption d'énergie souples en avant des régions latérales des membrures 30 et des montants 28 plus rigides, afin que lors d'un choc piéton médian ou latéral, la décélération demeure inférieure à la norme.

Dans des variantes, le bouclier monobloc 8 porte des blocs optiques additionnels (non représentés), des éléments (non représentés) de fixation de panneaux de la peau du bouclier, des éléments de fixation (non représentés) d'une calandre, ou des volets pilotés permettant d'être disposés derrière la calandre pour guider l'air de façon optimale.

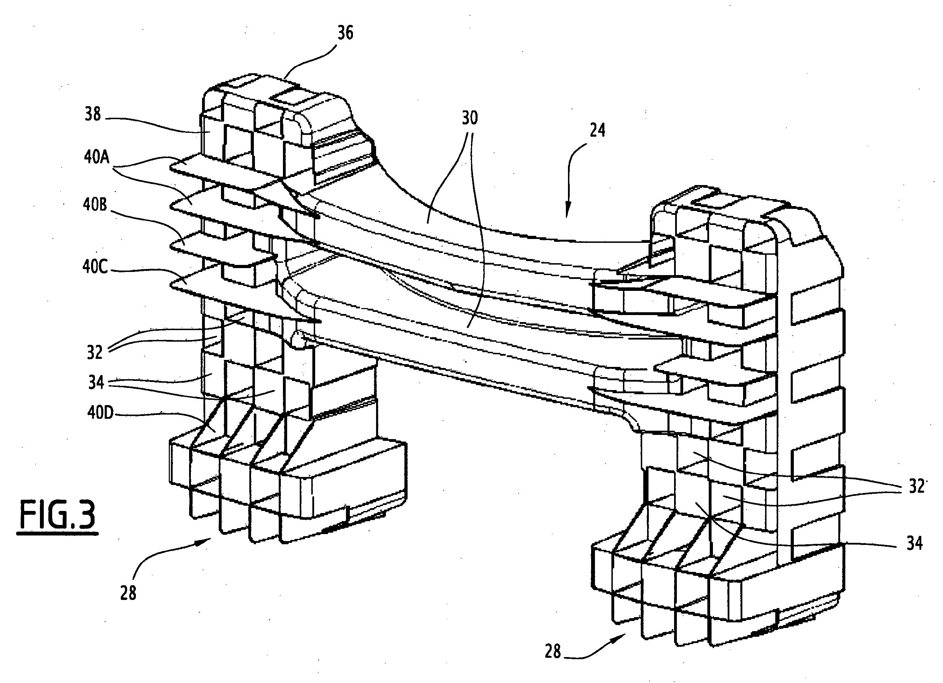

Dans le mode de réalisation de l'invention illustré aux figures 1 à 4, la poutre pare-chocs supérieure 24 est disposée sensiblement à hauteur des longerons principaux 12.

Selon une variante, la poutre pare-chocs supérieure 24 peut être décalée verticalement par rapport aux longerons principaux 12. Elle est par exemple disposée à une hauteur inférieure ou à une hauteur supérieure à celle des longerons principaux 12.

Selon une autre variante de la présente invention, le bouclier 8 pare-chocs est un bouclier pare-chocs arrière, adapté à être agencé à l'extrémité arrière de la partie arrière du châssis du véhicule.

## Revendications

1. Bouclier pare-chocs pour véhicule automobile comprenant deux longerons principaux (12), deux longerons auxiliaires (16) disposés à une hauteur inférieure, ainsi que des platines (20) d'appui et de fixation disposées entre les extrémités des longerons (12, 16), le bouclier pare-chocs étant monobloc en matière plastique et formé de deux montants (28) et d'une poutre supérieure (24) reliant les montants (28), les montants (28) étant configurés pour prendre appui sur les platines (20) de manière à faire office d'absorbeurs de chocs, **caractérisé en ce que** le bouclier a une forme en H ou en U inversé conférée par les montants (28) et la poutre supérieure (24).

2. Bouclier pare-chocs selon la revendication 1, dans lequel la poutre supérieure (24) est sensiblement à hauteur des longerons principaux (12).

3. Bouclier pare-chocs selon la revendication 1, dans lequel la poutre supérieure (24) est disposée à une hauteur sensiblement différente de celle des longerons principaux (12).

4. Bouclier pare-chocs selon l'une quelconque des revendications précédentes, dans lequel les montants (28) possèdent une épaisseur comprise entre 120 et 220 mm.

5. Bouclier pare-chocs selon l'une quelconque des revendications précédentes, dans lequel les montants (28) présentent une structure alvéolaire formée d'alvéoles s'étendant longitudinalement au travers des montants (28) et débouchant sur la face arrière et/ou avant du bouclier (8).

6. Bouclier pare-chocs selon la revendication 5, dans lequel chaque montant (28) comprend des premières alvéoles (32) borgnes, fermées du côté de la face arrière (36) et ouvertes du côté de la face avant (38), et des deuxièmes alvéoles (34) borgnes ouvertes du côté de la face arrière (36) et fermées du côté de la face avant (38).

7. Bouclier pare-chocs selon l'une quelconque des revendications précédentes, dans lequel la poutre pare-chocs supérieure (24) est double et comprend deux traverses (30) espacées verticalement.

8. Bouclier pare-chocs selon l'une quelconque des revendications précédentes, **caractérisé en ce qu'**il comprend au moins une nervure d'absorption piéton (40A à 40D) faisant saillie vers l'extérieur à partir d'un montant (28).

9. Ensemble pare-chocs de véhicule automobile, du type comprenant deux longerons principaux (12) et deux longerons auxiliaires (16) disposés à une hauteur inférieure et des platines (20) d'appui et de fixation disposées aux extrémités des longerons (12, 16), lequel comprend un bouclier (8) pare-chocs selon l'une des revendications précédentes, les montants (28) étant fixés en appui rigide montre les platines (20).

10. Ensemble selon la revendication 9, dans lequel les montants (28) sont fixés aux platines (20) par vissage et/ou collage.

11. Ensemble selon l'une quelconque des revendications 9 et 10, comprenant deux platines (20), chaque platine reliant un longeron principal (12) et un longeron auxiliaire (16) et s'étendant sur toute la hauteur séparant le longeron principal (12) du longeron auxiliaire (16), chaque montant (28) étant appliqué sur la platine commune (20) suivant sensiblement toute sa hauteur.

12. Ensemble selon l'une quelconque des revendications 9 à 11, lequel comprend en outre une poutre inférieure (29) s'étendant transversalement entre les longerons auxiliaires (16) et distincte du bouclier pare-chocs (8).

13. Ensemble selon la revendication 12, en combinaison avec la revendication 8, **caractérisé en ce qu'**une nervure d'absorption piéton (40A, 40C) se prolonge latéralement pour s'appliquer sur la poutre supérieure (24).

14. Ensemble selon l'une des revendications 9 à 13, lequel est un ensemble pare-chocs avant de véhicule automobile.

15. Ensemble selon l'une des revendications 9 à 13, lequel est un ensemble pare-chocs arrière de véhicule automobile.

## Patentansprüche

1. Verformbarer Stoßfänger für Kraftfahrzeug, welches zwei Hauptlängsträger (12), zwei Hilfslängsträger (16), die auf geringerer Höhe angeordnet sind, sowie Auflage- und Befestigungsplatten (20) aufweist, die zwischen den Enden der Längsträger (12, 16) angeordnet sind, wobei der verformbare Stoßfänger aus einem Stück aus einem Kunststoffmaterial und gebildet von zwei Pfosten (28) und einem oberen Balken (24) ist, der die Pfosten (28) verbindet, wobei die Pfosten (28) konfiguriert sind zum Aufgelegt-Werden auf die Platten (20), um als Stoßabsorber zu dienen, **dadurch gekennzeichnet, dass** der Stoßfänger eine Gestalt eines H oder eines umgedrehten U hat, welche von den Pfosten (28) und dem oberen Balken (24) gebildet ist.

2. Verformbarer Stoßfänger gemäß Anspruch 1, bei welchem der obere Balken (24) im Wesentlichen auf Höhe der Hauptlängsträger (24) ist.

3. Verformbarer Stoßfänger gemäß Anspruch 1, bei welchem der obere Balken (24) auf einer Höhe angeordnet ist, die im Wesentlichen verschieden von jener der Hauptlängsträger (12) ist.

4. Verformbarer Stoßfänger gemäß einem der vorhergehenden Ansprüche, bei welchem die Pfosten (28) eine Dicke haben, die zwischen 120 und 220 mm beträgt.

5. Verformbarer Stoßfänger gemäß einem der vorhergehenden Ansprüche, bei welchem die Pfosten (28) eine Zellenstruktur haben, die von Zellen Gebildet ist, die sich quer zu den Pfosten (28) längserstrecken und auf der Hinterseite und/oder vorne am Stoßfänger (8) ausmünden.

6. Verformbarer Stoßfänger gemäß Anspruch 5, bei welchem jeder Pfosten (28) aufweist erste Sackzellen (32), die auf der Hinterseite (36) geschlossen sind und auf der Vorderseite (38) offen sind, und zweite Sackzellen (34), die auf der Hinterseite (36) offen sind und auf der Vorderseite (38) geschlossen sind.

7. Verformbarer Stoßfänger gemäß einem der vorhergehenden Ansprüche, bei welchem der obere Stoßfänger-Balken (24) zweifach ist und zwei Traversen (30) hat, die vertikal im Abstand angeordnet sind.

8. Verformbarer Stoßfänger gemäß einem der vorhergehenden Ansprüche, **dadurch gekennzeichnet, dass** er wenigstens eine Fußgänger-Absorbier-Rippe (40A bis 40D) aufweist, die von einem Pfosten (28) aus nach außen hin vorsteht.

9. Stoßfänger-Vorrichtung eines Kraftfahrzeugs, des Typs aufweisend zwei Hauptlängsträger (12) und zwei Hilfslängsträger (16), die auf geringerer Höhe angeordnet sind, und Auflage- und Befestigungsplatten (20), die an Enden der Längsträger (12, 16) angeordnet sind, welche aufweist einen verformbaren Stoßfänger (8) gemäß einem der vorhergehenden Ansprüche, wobei die Pfosten (28) fixiert sind in steifer Auflage gegen die Platten (20).

10. Vorrichtung gemäß Anspruch 9, bei welcher die Pfosten (28) an den Platten (20) fixiert sind mittels Schraubverbindung und/oder Klebeverbindung.

11. Vorrichtung gemäß einem der Ansprüche 9 und 10, aufweisend zwei Platten (20), wobei jede Platte (20) einen Hauptlängsträger (12) und einen Hilfslängsträger (16) verbindet und sich über die gesamte, den Hauptlängsträger (12) vom Hilfslängsträger (16) separierende Höhe erstreckt, wobei jeder Pfosten (28) im Wesentlichen entlang seiner gesamten Höhe an die gemeinsame Platine (20) angesetzt ist.

12. Vorrichtung gemäß einem der Ansprüche 9 bis 11, welche ferner aufweist einen unteren Balken (29), der sich quer zwischen den Hilfslängsträgern (16) erstreckt und der verschieden von dem verformbaren Stoßfänger (8) ist.

13. Vorrichtung gemäß Anspruch 12 in Kombination mit Anspruch 8, **dadurch gekennzeichnet, dass** eine Fußgänger-Absorbier-Rippe (40A, 40C) sich lateral längserstreckt zum Ansetzen an den oberen Balken (24).

14. Vorrichtung gemäß einem der Ansprüche 9 bis 13, welche eine vordere Stoßfänger-Vorrichtung eines Kraftfahrzeugs ist.

15. Vorrichtung gemäß einem der Ansprüche 9 bis 13, welche eine hintere Stoßfänger-Vorrichtung eines Kraftfahrzeugs ist.

## Claims

1. A bumper shield for a motor vehicle comprising two main longitudinal members (12), two auxiliary longitudinal members (16) positioned at a lower height, as well as supporting and attachment plates (20) positioned between the ends of the longitudinal members (12, 16), the bumper shield being a single integral piece in plastic material and formed of two uprights (28) and an upper beam (24) connecting the uprights (28), the uprights (28) being configured in order to bear upon the plates (20) so as to act as impact absorbers, **characterized in that** the shield (8) has the shape of an H or an inverted U given by the uprights (28) and the upper beam (24).

2. The bumper shield according to claim 1, wherein the upper beam (24) is substantially at the height of the main longitudinal members (12).

3. The bumper shield according to claim 1, wherein the upper beam (24) is positioned at a height substantially different from that of the main longitudinal members (12).

4. The bumper shield according to any of the preceding claims, wherein the uprights (28) have a thickness comprised between 120 and 220 mm.

5. The bumper shield according to any of the preceding claims, wherein the uprights (28) have a cellular structure formed with cells extending longitudinally through the uprights (28) and opening onto the rear and/or front face of the shield (8).

6. The bumper shield according to claim 5, wherein each upright (28) comprises first blind cells (32), closed on the rear face side (36) and open on the front face side (38), and second blind cells (34) open on the rear face side (36) and closed on the front face side (38).

7. The bumper shield according to any of the preceding claims, wherein the upper bumper beam (24) is double and comprises two vertically spaced cross-members (30).

8. The bumper shield according to any of the preceding claims, **characterized in that** it comprises at least one pedestrian absorption rib (40A-40D) protruding outwards from an upright (28).

9. A bumper assembly of a motor vehicle, of the type comprising two main longitudinal members (12) and two auxiliary longitudinal members (16) positioned at a lower height, and supporting and attachment plates (20) positioned at the ends of the longitudinal members (12, 16), which assembly comprises a bumper shield (8) according to any of the preceding claims, the uprights (28) being attached and rigidly bearing against the plates (20).

10. The assembly according to claim 9, wherein the uprights (28) are attached to the plates (20) by screwing and/or adhesive bonding.

11. The assembly according to any of claims 9 and 10, comprising two plates (20), each plate connecting a main longitudinal member (12) and an auxiliary longitudinal member (16) and extending over the whole of the height separating the main longitudinal member (12) from the auxiliary longitudinal member (16), each upright (28) being applied onto the common plate (20) substantially along the whole of its height.

12. The assembly according to any of claims 9 to 11, which further comprises a lower beam (29) extending transversely between the auxiliary longitudinal members (16) and distinct from the bumper shield (8).

13. The assembly according to claim 12, in combination with claim 8, **characterized in that** a pedestrian absorption rib (40A, 40C) extends laterally so as to be applied on the upper beam (24).

14. The assembly according to any of claims 9 to 13, which is a motor vehicle front bumper assembly.

15. The assembly according to any of claims 9 to 13, which is a motor vehicle rear bumper assembly.
